# EUROPÄISCHE PATENTANMELDUNG

(11) **EP 4 847 289 A2**
(43) Veröffentlichungstag der Anmeldung: **02.12.2026**
(21) Anmeldenummer: 26181110.3
(22) Anmeldetag: 26.05.2026
(51) Int. Cl.: B60K 11/02, F16K 11/07, F16K 27/04

(54) **SCHALTVENTIL**

(30) Priorität: 28.05.2025 DE 102025120925
(71) Anmelder: POLYTEC PLASTICS Germany GmbH & Co. KG, 49393 Lohne (DE)
(72) Erfinder: Berding, Rüdiger, 49393 Lohne (DE); Burkert, Tobias, 49393 Lohne (DE); Esders, Helen, 49393 Lohne (DE); Jonitz, Andreas, 49393 Lohne (DE); Pytel, Sebastian, 49393 Lohne (DE); Soares, Jorge, 49393 Lohne (DE)
(74) Vertreter: dompatent

(57) **Zusammenfassung**

Die Erfindung betrifft ein Schaltventil (1), umfassend ein Gehäuse (2), eine Stelleinrichtung (7) und einen in dem Gehäuse (2) angeordneten Ventilkörper (3) mit mindestens zwei separaten Flusswegstrukturen (6), wobei das Gehäuse (2) und der Ventilkörper (3) mittels der Stelleinrichtung (7) relativ zueinander drehbar und/oder verschiebbar angeordnet sind, wobei das Gehäuse (2) mehrere Fluidanschlüsse (5) aufweist, wobei jeder Fluidanschluss (5) mit einer Fluidleitung verbindbar oder verbunden ist, wobei jede Flusswegstruktur (6) für jeden Fluidanschluss (5) einen Verschluss des Fluidanschlusses (5) oder eine Fluidverbindung zwischen dem Fluidanschluss (5) und mindestens einem weiteren Fluidanschluss (5) der mehreren Fluidanschlüsse (5) definiert, wobei die Stelleinrichtung (7) dazu ausgebildet ist, den Ventilkörper (3) zwischen mindestens zwei Hauptschaltstellungen reversibel zu verdrehen und/oder zu verschieben, wobei in jeder Hauptschaltstellung lediglich eine Flusswegstruktur (6) fluidtechnisch mit den Fluidanschlüssen (5) in Verbindung steht.

Weiterhin betrifft die Erfindung ein Thermalmanagementmodul für ein batterieelektrisch angetriebenes Fahrzeug, umfassend ein erfindungsgemäßes Schaltventil.

## Beschreibung

Die vorliegende Erfindung betrifft ein Schaltventil, das insbesondere zur Steuerung von Fluidkreisläufen in Fahrzeugen wie etwa in Kühl-, Heiz- und/oder Hydrauliksystemen eingesetzt werden kann. Derartige Ventile finden weiter Anwendung in modernen Fahrzeugarchitekturen, in denen eine präzise und zuverlässige Regelung von Fluidströmen erforderlich ist, um die Effizienz, die Sicherheit und den Komfort zu erhöhen.

Insbesondere betrifft die Erfindung ein Schaltventil, das eine kompakte Bauweise mit hoher Schaltgeschwindigkeit und Dichtigkeit kombiniert und sich durch eine verbesserte Steuerbarkeit sowie eine erhöhte Lebensdauer auszeichnet. Das Ventil ist sowohl für den Einsatz in thermischen Managementsystemen von Fahrzeugen mit Verbrennungs- und Elektromotoren und von Hybrid-Fahrzeugen mit Verbrennungs- und Elektromotoren als auch in weiteren fluidtechnischen Anwendungen geeignet, bei denen eine flexible Umschaltung zwischen verschiedenen Leitungswegen erforderlich ist.

Die Erfindung zielt darauf ab, bestehende Nachteile herkömmlicher Schaltventile zu überwinden und eine Lösung bereitzustellen, die sich durch eine verbesserte Funktionalität, geringeren Energieverbrauch und eine vereinfachte Integration in bestehende Systemarchitekturen auszeichnet.

Diese Aufgaben werden gelöst durch ein Schaltventil gemäß dem unabhängigen Anspruch 1 sowie durch ein Thermalmanagementmodul gemäß dem unabhängigen Anspruch 14. Weitere vorteilhafte Ausgestaltungen sind in den Unteransprüchen definiert.

Erfindungsgemäß wird ein Schaltventil vorgestellt umfassend ein Gehäuse, eine Stelleinrichtung und einen in dem Gehäuse angeordneten Ventilkörper mit mindestens zwei separaten Flusswegstrukturen, wobei das Gehäuse und der Ventilkörper mittels einer Stelleinrichtung relativ zueinander drehbar und/oder verschiebbar angeordnet sind, wobei das Gehäuse mehrere Fluidanschlüsse aufweist, wobei jeder Fluidanschluss mit einer Fluidleitung verbindbar oder verbunden ist. Jede Flusswegstruktur definiert für jeden Fluidanschluss einen Verschluss des Fluidanschlusses oder eine Fluidverbindung zwischen dem Fluidanschluss und mindestens einem weiteren Fluidanschluss der mehreren Fluidanschlüsse. Die Stelleinrichtung ist dazu ausgebildet, den Ventilkörper zwischen mindestens zwei Hauptschaltstellungen reversibel zu verdrehen und/oder zu verschieben, wobei in jeder Hauptschaltstellung lediglich eine Flusswegstruktur fluidtechnisch mit den Fluidanschlüssen in Verbindung steht.

Im Rahmen der vorliegenden Beschreibung ist unter einem Fluidanschluss nicht zwingend ein körperlich ausgebildetes Bauteil zu verstehen. Vielmehr kann ein Fluidanschluss auch als eine Anschlussmöglichkeit, ein Auslass, eine Öffnung oder ein Fluidport aufgefasst werden, der eine fluidtechnische Verbindung ermöglicht, unabhängig davon, ob eine physische Ausgestaltung im Sinne eines festen Bauteils vorliegt.

Erfindungsgemäß ist es vorgesehen, dass in jeder Hauptschaltstellung der mindestens zwei Hauptschaltstellungen lediglich eine singuläre Flusswegstruktur der mehreren Flusswegstrukturen fluidtechnisch mit den Fluidanschlüssen kommuniziert bzw. mit diesen fluidtechnisch in Verbindung steht.

Eine Flusswegstruktur beinhaltet ein vordefiniertes Verbindungsschema der Fluidanschlüsse. Eine Flusswegstruktur kann als eigenständiger Kodierungssatz zur Realisierung einer Hauptschaltstellung bezeichnet werden. Jede Hauptschaltstellung definiert für jeden Fluidanschluss einen Zustand, der entweder eine Verbindung mit einem anderen Fluidanschluss oder einen Verschluss definiert.

Ein wesentlicher Vorteil des erfindungsgemäßen Schaltventils liegt in dessen vollfaktorieller Kodierbarkeit. Dies bedeutet, dass für jeden Fluidanschluss mit einer zugeordneten Flusswegstruktur ein eindeutig definierter Schaltzustand realisierbar ist. Dadurch wird durch die Mehrzahl von Flusswegstukturen eine systematische und vollständige Abbildung aller möglichen Verbindungszustände zwischen den Fluidanschlüssen ermöglicht.

Insbesondere erlaubt die vollfaktorielle Kodierbarkeit eine gezielte Umschaltung des Fluidflusses, sobald eine erste Flusswegstruktur außer Eingriff und eine beliebige andere Flusswegstruktur durch eine entsprechende Weiterschaltung des Ventils in Eingriff gebracht wird. Der Flussweg des Mediums kann somit vollständig und kontrolliert verändert werden, was eine hohe Flexibilität und Anpassungsfähigkeit des Ventilsystems an unterschiedliche Betriebsanforderungen gewährleistet.

Nach einer vorteilhaften Ausgestaltung weist der Ventilkörper und/oder das Gehäuse mindestens ein Dichtungselement zur Abdichtung zur fluidtechnischen Verbindung der Fluidanschlüsse mit der in Verbindung stehenden Flusswegstruktur des Ventilkörpers auf. Das Dichtungselement kann zweiteilig ausgeführt sein, beispielsweise eine Manschette und ein elastisches Element umfassend. Das elastische Element kann ein Elastomer sein oder umfassen. Die Manschette kann ihrerseits ebenfalls aus einem Elastomer bestehen oder ein solches umschließen. Durch eine gezielte Abdichtung zwischen dem Fluidanschluss und der Flusswegstruktur wird ein zuverlässiger Abschluss zwischen unterschiedlichen Bestandteilen des Schaltventils gewährleistet. Dies reduziert die Gefahr von inneren Leckagen und erhöht somit die Effizienz und die Betriebssicherheit des Systems. Insofern wird die Dichtwirkung verbessert. Zudem kann durch eine Auswahl geeigneter Dichtungsmaterialien eine hohe Beständigkeit gegenüber den im Fluidkreislauf auftretenden Temperaturen gesichert werden, so dass die thermische Beständigkeit des Schaltventils erhöht wird. Das Dichtungselement kann als separates austauschbares Bauteil ausgeführt sein, was Wartung und Reparatur vereinfacht und die Systemverfügbarkeit erhöht.

Gemäß einer weiteren vorteilhaften Ausgestaltung weist die Stelleinrichtung einen Antriebsmechanismus auf, beispielsweise einen Linearantrieb, vorzugsweise als Spindelantrieb ausgeführt. Der Antriebsmechanismus zur Verstellung des Ventilkörpers ermöglicht eine präzise und energieeffiziente Bewegung bei kompakter Bauweise. Durch die optionale Zwischenschaltung eines ein- oder mehrstufigen Getriebes kann das Drehmoment bedarfsgerecht angepasst werden, was den Einsatz kleinerer und energieeffizienter Antriebe ermöglicht. Diese Lösung zeichnet sich durch hohe Stellgenauigkeit, geringe innere Leckagegefahr und eine robuste sowie wartungsarme Ausführung aus.

Gemäß einer weiteren vorteilhaften Ausgestaltung ist die Stelleinrichtung elektrisch, pneumatisch oder hydraulisch betreibbar. Diese Ausgestaltung ermöglicht eine flexible Integration in unterschiedliche Systeme, Architekturen und Anwendungsbereiche. Elektrische Antriebe bieten eine präzise Steuerbarkeit und einfache Anbindung an elektronische Steuergeräte und sind besonders bevorzugt. Pneumatische Antriebe zeichnen sich durch schnelle Schaltzeiten und hohe Zuverlässigkeit in dynamischen Umgebungen aus. Hydraulische Antriebe wiederum ermöglichen hohe Stellkräfte bei kompakter Bauform, was insbesondere bei Anwendungen mit hohem Gegendruck vorteilhaft ist. Die Wahl des Antriebs kann somit an die jeweiligen Anforderungen hinsichtlich Dynamik, Energieversorgung und Einbauraum angepasst werden.

Gemäß einer weiteren vorteilhaften Ausgestaltung weist die Stelleinrichtung eine Kulissenführung auf, die dazu eingerichtet ist, den Ventilkörper innerhalb des Gehäuses entlang einer Verschiebungs- und/oder Rotationsachse translatorisch und/oder rotatorisch zu führen. Darüber hinaus erlaubt die Kulissenführung eine Rotation des Ventilkörpers in beide Richtungen - sowohl im Uhrzeigersinn als auch gegen den Uhrzeigersinn.

Die Verwendung einer Kulissenführung bietet mehrere konstruktive und funktionale Vorteile. Durch die definierte Führung wird eine präzise translatorische und/oder rotatorische Bewegung des Ventilkörpers ermöglicht, wodurch die Hauptschaltstellungen exakt angefahren werden können. Dies erhöht die Reproduktionsgenauigkeit und reduziert mechanisches Spiel. Zudem erlaubt die Kulissenführung eine kompakte und robuste Bauweise, da sie mechanisch einfach aufgebaut und unempfindlich gegenüber äußeren Einflüssen ist. Sie kann sowohl für lineare als auch rotatorische als auch kombinierte Bewegungsabläufe ausgelegt werden und eignet sich damit ideal für komplexe Schaltfunktionen bei hoher Betriebssicherheit.

Gemäß einer weiteren vorteilhaften Ausgestaltung liegen die Fluidanschlüsse in einer Ebene, bevorzugt orthogonal zu einer Verschiebungs- und/oder Rotationsachse des Ventilkörpers. Der Ventilkörper ist entlang der Verschiebungs- und/oder Rotationsachse angeordnet, wobei diese Achse so ausgebildet ist, dass sie eine präzise translatorische Verschiebung und/oder eine definierte rotatorische Bewegung des Ventilkörpers relativ zum Ventilgehäuse ermöglicht. Die Achse kann dabei eine zentrale Führungsachse innerhalb des Gehäuses darstellen, entlang derer der Ventilkörper beweglich ist. Die Bewegung entlang dieser Führungsachse kann durch die Stelleinrichtung bewirkt werden, welche eine lineare, rotatorische oder kombinierte Bewegung ermöglicht. Zur Realisierung von kombinierten Bewegungen ist vorzugsweise eine zusätzliche Führungskontur für den Ventilkörper vorhanden. Dadurch lässt sich der Ventilkörper mit hoher Genauigkeit und Wiederholgenauigkeit in eine gewünschte Stellung bringen, wobei die Bauweise sowohl eine kompakte Integration als auch eine spielfreie Führung erlaubt. Die Anordnung, bei der die Fluidanschlüsse in einer Ebene, bevorzugt orthogonal zu einer Verschiebungs- und/oder Rotationsachse des Ventilkörpers liegen, ist vorteilhaft im Hinblick auf eine kompakte Bauweise und die Bauraumarme und fluiddichte Anbindung an bereits bestehende Fluidelemente.

Gemäß einer weiteren vorteilhaften Ausgestaltung ist die Stelleinrichtung dazu ausgebildet, den Ventilkörper in mindestens eine Zwischenschaltstellung reversibel zu verdrehen und/oder zu verschieben, wobei in jeder Zwischenschaltstellung zwei aneinander angrenzende Flusswegstrukturen fluidtechnisch mit den Fluidanschlüssen in Verbindung stehen. Dabei können die zwei aneinander angrenzenden Flusswegstrukturen zu stufenlos variablen Anteilen fluidtechnisch mit den Fluidanschlüssen in Verbindung stehen. Beispielsweise können die beiden aneinander angrenzenden Flusswegstrukturen jeweils zu gleichen Teilen fluidtechnisch mit den Fluidanschlüssen in Verbindung stehen. Es ist jedoch auch möglich, dass die Anteile beispielsweise 75 % zu 25 % oder 90 % zu 10 % oder jegliche andere Anteilsverteilung betragen. Mit zwei aneinander angrenzenden Flusswegstrukturen sind in diesem Kontext zwei benachbarte Flusswegstrukturen im Hinblick auf eine Achse der Verdrehung und/oder Verschiebung des Ventilkörpers gemeint. Beispielsweise kann bei variablen Betriebsbedingungen durch eine stufenlose Regelung der Zwischenschaltstellung die Temperatur eines Temperiermediums auf einem Sollwert gehalten werden, indem ein variabler Anteil des Temperiermediums durch eine Kühlvorrichtung oder einen Radiator, geleitet wird.

Insbesondere dann, wenn der Ventilkörper in eine Zwischenschaltstellung verschiebbar ist, ist das Dichtungselement bevorzugt derart geometrisch ausgeführt, dass es sowohl in den Hauptschaltstellungen als auch in etwaigen Zwischenschaltstellungen des Ventilkörpers eine zuverlässige Abdichtung gewährleistet. Hierzu kann das Dichtungselement vorzugsweise eine umlaufende, in axialer und/oder radialer Richtung ausgeprägte Dichtlippenstruktur aufweisen, deren Höhe und/oder Breite so bemessen ist, dass auch nicht aktiv durchströmte Bereiche einer Flusswegstruktur fluiddicht verschlossen werden.

Insbesondere ist das Dichtungselement in seiner Geometrie so angepasst, dass es in Zwischenschaltstellungen des Ventils, in denen keine vollständige Überdeckung der Fluidanschlüsse mit den Flusswegstrukturen erfolgt, eine wirksame Trennung zwischen aktiven und inaktiven Strömungspfaden sicherstellt. Die Dichtkontur kann dabei mehrstufig oder segmentiert ausgebildet sein, um unterschiedlichen Druckverhältnissen und Toleranzanforderungen gerecht zu werden.

Die Materialwahl und Formgebung des Dichtungselements sind ferner so ausgelegt, dass eine dauerhafte elastische Rückstellkraft gewährleistet ist, wodurch eine hohe Dichtwirkung bei gleichzeitig geringer Leckagegefahr erzielt wird. Wenn das Dichtungselement in zweiteiliger Form ausgeführt ist, kann die Abdichtung der inaktiven Strömungspfade beispielsweise über eine Manschette realisiert werden.

Gemäß einer weiteren vorteilhaften Ausgestaltung ist bzw. sind der Ventilkörper und/oder das Gehäuse aus einem Kunststoffmaterial bevorzugt aus einem Kunst- oder langfaserverstärkten Kunststoffmaterial ausgebildet. Die Verwendung von Kunststoff, insbesondere faserverstärktem Kunststoff, für den Ventilkörper und/oder das Gehäuse ermöglicht eine gewichtsreduzierte, korrosionsbeständige und kosteneffiziente Ausführung. Gleichzeitig erlaubt das Material komplexe Geometrien und bietet bei entsprechender Verstärkung eine hohe mechanische Stabilität sowie thermische Beständigkeit. Zudem kann die geringe Wärmeleitfähigkeit des Kunststoffs zur thermischen Trennung, d.h. zur thermischen Isolation im Falle zwischen zwei oder mehr parallel durch das Schaltventil verlaufende Kreisläufen genutzt werden.

Gemäß einer weiteren vorteilhaften Ausgestaltung ist mindestens ein Aufnahmeraum zwischen der Gehäuseinnenwandung des Gehäuses und dem Ventilkörper zur Aufnahme eines Fluides ausgebildet, wobei das Gehäuse mindestens einen zusätzlichen Fluidanschluss aufweist zur Zu- und/oder Abführung eines Fluides in den mindestens einen Aufnahmeraum oder mit einer Fluidleitung über einen der Fluidanschlüsse fluidtechnisch verbunden ist. Über einen zusätzlichen Fluidanschluss kann ein Fluid aus einem Temperierkreislauf ein- und/oder ausgeleitet werden. Der Aufnahmeraum kann als Ausgleichsbehälter fungieren, der dazu dient, temporär überschüssige Flüssigkeiten aufzunehmen, ohne die Druckverhältnisse im Temperierkreislauf und/oder im Schaltventil negativ zu beeinflussen.

Gemäß einer weiteren vorteilhaften Ausgestaltung sind mindestens zwei Aufnahmeräume ausgebildet, wobei im Ventilkörper und/oder im Bereich des Gehäuses mindestens ein Fluidverbindungskanal ausgebildet ist, welcher bevorzugt parallel zu der Verschiebungs- und/oder Rotationsachse verläuft und die mindestens zwei Aufnahmeräume fluidtechnisch miteinander verbindet. Diese Ausgestaltung erhöht die Flexibilität des Gesamtsystems hinsichtlich der Option für einen Druckausgleich und eine Volumenkompensation. Volumenschwankungen des Fluids aufgrund von wechselnden Temperatur- oder Betriebsparametern können dadurch ausgeglichen werden. Gleichzeitig fungieren die Aufnahmeräume als Pufferreservoir, die bei Bedarf Fluid bereitstellen oder überschüssiges Fluid aufnehmen können. Darüber hinaus ermöglichen die Aufnahmeräume eine Entgasung des Fluids, indem sich eingeschlossene Luft und/oder Dampfblasen im oberen Bereich sammeln können. Diese Aufnahmeräume stellen zudem einen Zugangspunkt dar, der das Befüllen, Nachfüllen und/oder Entlüften des Systems vereinfacht, was Wartung und Betrieb wesentlich effizienter gestaltet.

Die Aufnahmeräume haben zudem bei der besonders bevorzugten Ausführung mit axialer Bewegungsrichtung des Ventilkörpers die Aufgabe, solche Bereiche bzw. die Flusswegstrukturen des Ventilkörpers aufzunehmen, die nicht aktiv sind, d.h. nicht durchströmt werden. Der Fluidverbindungskanal hat bei axialer Bewegung des Ventilkörpers in eine Richtung die Aufgabe, das Fluid aus einem der Aufnahmeräume über den Fluidverbindungskanal in die im Wesentlichen jeweils entgegengesetzte Richtung strömen zu lassen. Der Ventilkörper kann das Fluid somit aus einem erstenAufnahmeraum durch den Fluidverbindungskanal in einen zweiten Aufnahmeraum verdrängen, um selbst von dem ersten Aufnahmeraum aufgenommen werden zu können.

Gemäß einer weiteren vorteilhaften Ausgestaltung ist alternativ oder ergänzend ein Aufnahmeraum zur Aufnahme eines Fluides an das Gehäuse angeformt, wobei der Aufnahmeraum über mindestens einen zusätzlichen Fluidanschluss oder einen Durchgang zur Zu- und/oder Abführung eines Fluides mit dem Gehäuseinneren verbunden ist oder wobei der Aufnahmeraum mit einer Fluidleitung über einen der Fluidanschlüsse fluidtechnisch verbunden ist. Ein an das Gehäuse angeformter Aufnahmeraum dient als externer Ausgleichsbehälter mit den oben beschriebenen Funktionen.

Gemäß einer weiteren vorteilhaften Ausgestaltung ist das Schaltventil im Inneren eines Ausgleichsbehälters angeordnet und über mindestens einen Fluidanschluss oder einem Durchgang mit dem Ausgleichsbehälter verbunden. Die Anordnung des Schaltventils im Inneren des Ausgleichsbehälters ermöglicht eine besonders kompakte Bauweise und reduziert den Bedarf an externen Leitungsverbindungen, wodurch potenzielle Leckstellen minimiert werden. Gleichzeitig ist das Schaltventil durch die Position im Behälter vor äußeren Einflüssen geschützt und profitiert von einer thermischen Stabilisierung durch das umgebende Fluid. Dies führt insgesamt zu einer erhöhten Funktionssicherheit sowie einer vereinfachten Systemintegration.

Der Ausgleichsbehälter kann eine separate Einfüllöffnung aufweisen, über die das Fluid in den Behälter eingebracht werden kann. Die Einfüllöffnung kann dabei mit einem Verschlussmittel versehen sein und dient insbesondere der Erstbefüllung, Nachfüllung oder Wartung des Systems.

Gemäß einer weiteren vorteilhaften Ausgestaltung weist der Ventilkörper die Form eines Zylindersegmentes oder Zylindersektors auf, wobei die Verschiebungs- und/oder Rotationsachse entlang der Mittelpunktsachse des Zylindersegments oder Zylindersektors verläuft, wobei jede der mehreren Flusswegstrukturen in einem von mehreren Umfangsabschnitten entlang eines Umfangs um die Mittelpunktsachse des Zylindersegments oder Zylindersektors ausgebildet ist. Dabei wird jede Flusswegstruktur jeweils in einem Umfangsabschnitt entlang des Umfangs des Ventilkörpers ausgebildet. Dabei ist die Mittelpunktsachse eines Zylindersegments oder Zylindersektors eine gedachte Linie, die durch den Mittelpunkt des gekrümmten Mantelbogens verläuft und senkrecht zur ebenen Schnittfläche steht. Sie entspricht einem Abschnitt der Achse des ursprünglichen Zylinders begrenzt auf den Bereich des jeweiligen Segments oder Sektors.

Gemäß einer weiteren vorteilhaften Ausgestaltung weist der Ventilkörper die Form eines Zylinders, insbesondere eines Kreiszylinders mit einer Mittelpunkts-achse, auf, wobei die Verschiebungs- und/oder Rotationsachse entlang der Mittelpunktsachse des Zylinders verläuft, wobei jede der mehreren Flusswegstrukturen in einem von mehreren Längsabschnitten des Zylinders entlang der Mittelpunktsachse ausgebildet ist. Dabei wird jede Flusswegstruktur jeweils durch einen Längsabschnitt entlang der Mittelpunktsachse ausgebildet.

Gemäß einer weiteren vorteilhaften Ausgestaltung weist der Ventilkörper und/oder das Gehäuse rotationssymmetrische, insbesondere runde, Querschnittsbleche quer zur Verschiebungs- und/oder Rotationsachse auf. Die Ausbildung des Ventilkörpers in Form eines Zylinders, insbesondere eines Kreiszylinders mit einer Mittelpunktsachse, ermöglicht eine besonders einfache und präzise Führung des Ventilkörpers durch die Anordnung der Flusswegstrukturen in separaten Längsabschnitten. Entlang dieser Achse kann eine klare funktionale Trennung der Strömungswege erreicht werden, was die Steuerbarkeit und Modularität des Ventils verbessert. Zudem führt die rotationssymmetrische, insbesondere runde, Querschnittsfläche von Ventilkörper und/oder Gehäuse zu einer gleichmäßigen Krafteinleitung und ist leicht herzustellen. Dies trägt zu einer robusten, montagefreundlichen und kosteneffizienten Bauweise bei.

Gemäß einer vorteilhaften Ausgestaltung ist das Schaltventil derart ausgebildet, dass es in eine sogenannte Befüllungsposition verfahrbar ist. In dieser Stellung sind sämtliche Fluidanschlüsse fluidtechnisch miteinander verbunden, während keine der Flusswegstrukturen mit den Fluidanschlüssen im Eingriff steht. Die Flusswegstrukturen befinden sich somit zumindest im Wesentlichen außerhalb des aktiven Strömungsbereichs.

Diese Befüllungsposition dient insbesondere der händischen Befüllung des Systems unter Ausnutzung der Schwerkraft, beispielsweise im Rahmen einer Wartung oder Nachbefüllung. Durch die vollständige Durchgängigkeit zwischen den Fluidanschlüssen wird ein freier Fluss des Fluids durch das Ventil ermöglicht, ohne dass eine gezielte Steuerung oder Umlenkung durch die Flusswegstrukturen erfolgt.

Gemäß einer weiteren vorteilhaften Ausgestaltung ist die Befüllungsposition durch eine Zwischenschaltstellung zweier aneinander angrenzender Flusswegstrukturen realisierbar, wobei sich beiden Flusswegstrukturen in Kombination so ergänzen, dass alle Fluidanschlüsse miteinander fluidtechnisch verbunden sind. Ein Vorteil dieser Ausführung ist ihr besonders geringer Bauraumbedarf, da der Ventilkörper und dessen Flusswegstrukturen zur Realisierung der Befüllungsposition im Eingriff bleiben können.

Es kann vorgesehen sein, dass eine der Haupt- oder Zwischenschaltstellungen als Parallelstellung des Ventilkörpers ausgebildet ist, in der ein oder zwei benachbarte Flusswegstrukturen so fluidtechnisch mit den Fluidanschlüssen kommunizieren, dass jeder der mehreren Fluidkreisläufe intern geschlossen ist, sodass keine Verbindung zwischen unterschiedlichen Fluidkreisläufen besteht. In einer solchen Parallelstellung ist keine Vermischung oder gezielte Leitung von Fluid zwischen den einzelnen Fluidkreisläufen möglich. Dadurch können Rückflüsse oder Druckspitzen innerhalb eines Kreislaufs abgefangen werden, ohne andere Kreisläufe zu beeinflussen. Zudem erleichtert diese Positionsstellung Wartungs- und/oder Diagnosearbeiten, da einzelne Kreisläufe gezielt geprüft oder entlüftet werden können, ohne das Gesamtsystem zu beeinträchtigen. Auch der Energieverbrauch kann je nach Randbedingung in dieser Stellung reduziert und/oder der Komfort erhöht und/oder die Betriebssicherheit erhöht werden, da jeder Kreislauf für sich gezielt temperiert werden kann.

Es kann ferner vorgesehen sein, dass eine der Haupt- oder Zwischenschaltstellungen als Reihenstellung des Ventilkörpers ausgebildet ist, in der sämtliche Fluidanschlüsse derart fluidtechnisch miteinander verbunden sind, dass alle angeschlossenen Fluidkreisläufe in Reihe geschaltet sind. In dieser Stellung erfolgt eine Durchleitung eines gemeinsamen Fluidanteils durch wenigstens zwei Bereiche des Thermalmanagement-Systems .

Die Reihenstellung ist bevorzugt als Endstellung des Ventils ausgebildet und kann insbesondere dann angefahren werden, wenn ein Fehlerzustand vorliegt, beispielsweise bei einem Ausfall der Kommunikation zwischen einem Steuergerät und dem Schaltventil. In einem solchen Fall fungiert die Reihenstellung als Fail-Safe-Stellung, um einen definierten und sicheren Betriebszustand des Systems zu gewährleisten. Es ist möglich, dass ein mechanisches, ausfallsicheres Verstellmittel, beispielsweise ein Federelement, vorgesehen wird, um die Fail-Safe-Stellung in einem Störfall anfahren zu können.

Wird eine Reihenstellung als Fail-Safe-Stellung verwendet, werden vorzugsweise alle zu temperierenden insbesondere Abwärme-erzeugenden Komponenten des Thermalmanagement-Systems nacheinander durchströmt, einschließlich wenigstens einer Kühleinrichtung vorzugsweise wenigstens eines Radiators zur Wärmeabfuhr.

Gemäß einem weiteren erfinderischen Gedanken wird ein Thermalmanagement-Modul für ein batterieelektrisch angetriebenes Fahrzeug vorgestellt, das ein Schaltventil nach einem der Ansprüche 1-16 umfasst.

Das Thermalmanagement-Modul weist eine erste und eine zweite fluiddichte, polymere Trägerschicht mit jeweils einer ersten und einer gegenüberliegenden zweiten Schichtoberfläche auf. Die ersten Schichtoberflächen der ersten und zweiten Trägerschicht sind einander zugewandt angeordnet und bereichsweise entlang einer ersten Verbindungsebene stoffschlüssig miteinander verbunden. Zwischen der ersten und der zweiten Trägerschicht ist ein Anschlussraum zur Anordnung und Ankopplung eines erfindungsgemäßen Schaltventils durch erste Auswölbungen in der ersten und/oder zweiten Trägerschicht integral ausgebildet. Die ersten Auswölbungen erstrecken sich von der ersten Verbindungsebene abstehend.

Mehrere voneinander abgegrenzte Fluidleitungen für den Transport eines Temperierungsfluids zwischen der ersten und zweiten Trägerschicht durch zweite Auswölbungen in der ersten Trägerschicht integral ausgebildet, wobei sich die zweiten Auswölbungen von der ersten Verbindungsebene abstehend erstrecken.

Der Anschlussraum weist eine Mehrzahl von Ports zur fluiddichten Ankopplung von Ein- und Ausgängen des Schaltventils auf, die jeweils integral mit einem jeweiligen ersten Ende der Fluidleitungen ausgebildet sind und mit diesen fluidtechnisch kommunizieren.

An mehreren jeweiligen zweiten Enden der Fluidleitungen sind integral Anbindungseinrichtungen zur Ankopplung von Fluidkreisläufen des batterieelektrisch angetriebenen Fahrzeuges an die Fluidleitungen ausgebildet.

Die Erfindung wird anhand der Figuren 1-4 näher erläutert.

Es zeigen:
- Fig. 1A: eine erste Ansicht eines erfindungsgemäßen Schaltventils in einer Hauptschaltstellung;
- Fig. 1B: eine erste Ansicht eines erfindungsgemäßen Schaltventils in einer Zwischenschaltstellung;
- Fig. 2A: eine Schnittansicht durch das Schaltventil entlang einer ersten Flusswegstruktur;
- Fig. 2B: eine Schnittansicht durch das Schaltventil entlang einer zweiten Flusswegstruktur;
- Fig. 2C: eine Schnittansicht durch das Schaltventil entlang einer dritten Flusswegstruktur;
- Fig. 3: ein Schaltschema eines Thermalmanagementsystems;
- Fig. 4: eine Explosionsdarstellung des erfindungsgemäßen Schaltventils.

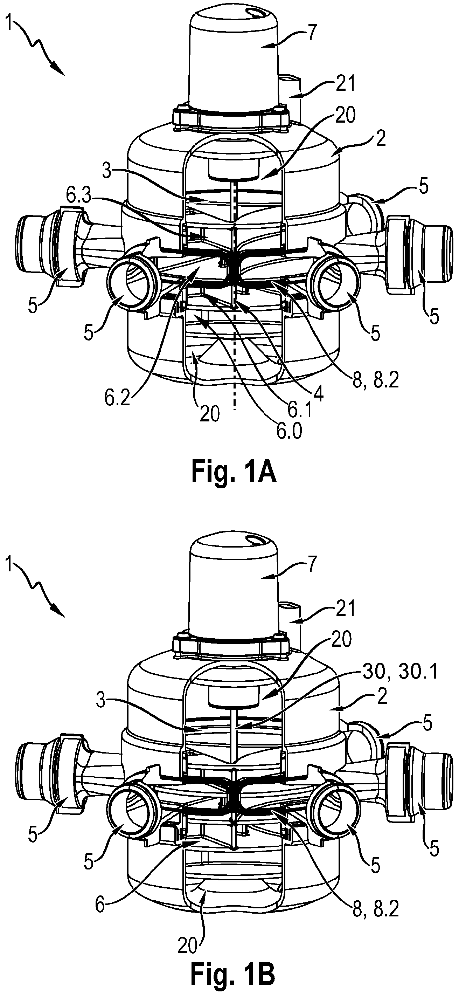

Fig. 1A zeigt ein erfindungsgemäßes Schaltventil 1 in einer Hauptschaltstellung. Das Schaltventil 1 weist ein Gehäuse 2 auf. In dem Gehäuse 2 ist ein Ventilkörper 3 angeordnet. Der Ventilkörper 3 ist entlang einer Verschiebungs- und/oder Rotationsachse 4 verschieblich angeordnet. An das Gehäuse 2 sind mehrere Fluidanschlüsse 5 angeformt. Der Ventilkörper 3 weist eine Mehrzahl von separaten Flusswegstrukturen 6.0, 6.1, 6.2, 6.3 auf, wobei jede Flusswegstruktur 6 für jeden Fluidanschluss 5 einen Verschluss des Fluidanschlusses 5 oder eine Fluidverbindung zwischen dem Fluidanschluss 5 und mindestens einem weiteren Fluidanschluss 5 definiert.

Im oberen Bereich des Gehäuses 2 ist eine Stelleinrichtung 7 ausgebildet, die im dargestellten Ausführungsbeispiel einen Linearantrieb 30 antreibt bzw. beinhaltet. Vorzugsweise ist der Linearantrieb als Spindelantrieb bzw. Bewegungsschraubenantrieb ausgeführt, umfassend eine Spindel und einer Spindelmutter. Diese ist dazu ausgebildet, den Ventilkörper 3 zwischen mindestens zwei Hauptschaltstellungen reversibel zu verdrehen und/oder zu verschieben. Die Stelleinrichtung 7 kann im oberen Bereich des Gehäuses 2, der hier verschlossen ist, angeordnet sein. Sie kann auch extern, im unteren Bereich oder integral ausgebildet sein. Erfindungsgemäß ist vorgesehen, dass in jeder Hauptschaltstellung lediglich eine singuläre Flusswegstruktur 6 fluidtechnisch mit den Fluidanschlüssen 5 kommuniziert bzw. mit diesen fluidtechnisch in Verbindung steht. In der in Fig. 1A dargestellten Position ist das Schaltventil in einer der Hauptschaltstellungen, so dass nur eine Flusswegstruktur 6, hier exemplarisch die Flusswegstruktur 6.2, in Eingriff mit den Fluidanschlüssen 5 steht.

Zwischen dem Ventilkörper 3 und dem Gehäuse 2 ist im Bereich der Fluidanschlüsse 5 ein Dichtungselement 8 angebracht. Das Dichtungselement 8 ist als umlaufende Dichtstruktur ausgebildet, die den Ventilkörper 3 umgibt. Es verläuft ringförmig entlang eines äußeren Umfangs des Ventilkörpers und ist so positioniert, dass es zwischen Fluidanschluss und Ventilkörper anliegt. Dadurch wird eine durchgehende Abdichtung zwischen den Fluidanschlüssen und der innenliegenden, jeweils im Eingriff stehenden mindestens einen Flusswegstruktur 6 gewährleistet. Das Dichtungselement 8 kann einstückig oder mehrteilig ausgeführt sein und besteht vorzugsweise aus einem elastischen, beständigen Werkstoff. Die Öffnungen im Dichtungselement sind so gestaltet, dass sie eine formschlüssige und dichte Verbindung mit den jeweiligen Anschlussstellen ermöglichen.

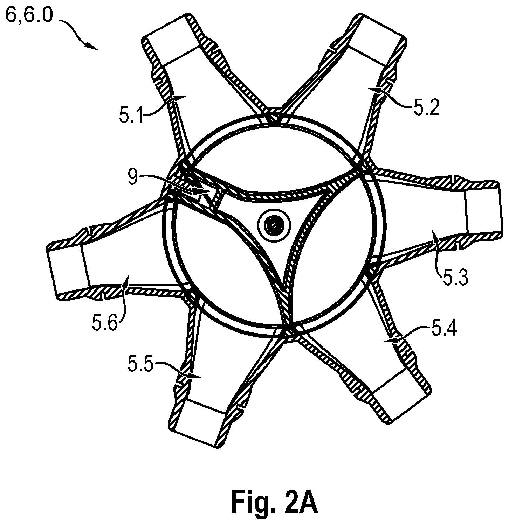

Aufnahmeräume 20 sind innerhalb des Gehäuses 2 angeordnet und befinden sich jeweils im Bereich oberhalb und unterhalb des Ventilkörpers 3. Sie dienen zur Aufnahme von überschüssigem Fluid und/oder den Bereichen bzw. den Flusswegstrukturen des Ventilkörpers, die nicht aktiv sind, d.h. nicht im Eingriff mit den Fluidanschlüssen 5 stehen. Die Aufnahmeräume 20 stehen über den Fluidverbindungskanal 9 (gezeigt in den Figuren 2A-2C) in fluidtechnischer Verbindung miteinander. Durch ihre vertikale Anordnung entlang der Verschiebungs- und/oder Rotationsachse wird eine kompakte Bauweise ermöglicht, wobei gleichzeitig eine effiziente Fluidführung zwischen den beiden Aufnahmeräumen gewährleistet ist. Über den zusätzlichen Fluidanschluss 21 kann ein Fluid aus einem Temperierkreislauf ein- und/oder ausgeleitet werden.

Fig. 1B zeigt das erfindungsgemäße Schaltventil in einer Zwischenschaltstellung. Dazu ist der Ventilkörper 3 relativ zum Gehäuse 2 um die Höhe einer halben Flusswegstruktur 6 verschoben. In der gezeigten Position ist der Ventilkörper 3 im Vergleich zur Darstellung in Fig. 1A nach unten verschoben. In der Zwischenschaltstellung stehen zwei aneinander angrenzende Flusswegstrukturen 6, hier exemplarisch die Flusswegstruktur 6.2 und die Flusswegstruktur 6.3, fluidtechnisch mit den Fluidanschlüssen 5 in Verbindung. Dies ist beispielhaft zu gleichen Anteilen realisiert. Es ist jedoch auch möglich, eine Verschiebung entlang der Verschiebungs- und/oder Rotationsachse stufenlos zu variablen Anteilen einzustellen.

Fig. 2A zeigt eine Flusswegstruktur 6.0, die im Eingriff mit den Fluidanschlüssen 5 steht. Die Flusswegstruktur 6.0 sowie wie alle weiteren Flusswegstrukturen sind innerhalb des Ventilkörpers 3 angeordnet. Diese sind relativ zum Gehäuse 2, an dem die Fluidanschlüsse 5 angeordnet sind, verschiebbar.

Es wäre auch möglich, dass die Flusswegstrukturen zusätzlich oder alternativ in dem Gehäuse 2 verdrehbar angeordnet sind. In diesem Fall könnten mit einer Flusswegstruktur 6 unterschiedliche Schaltzustände erreicht werden.

Ist diese Flusswegstruktur 6.0 in der gezeigten Orientierung im Eingriff, sind die Fluidanschlüsse 5.1 und 5.2 miteinander durch die Flusswegstruktur 6.0 verbunden. Ebenso sind die Fluidanschlüsse 5.3 und 5.4 durch die Flusswegstruktur 6.0 miteinander verbunden und die Fluidanschlüsse 5.5 und 5.6 sind durch die Flusswegstruktur 6.0 miteinander verbunden.

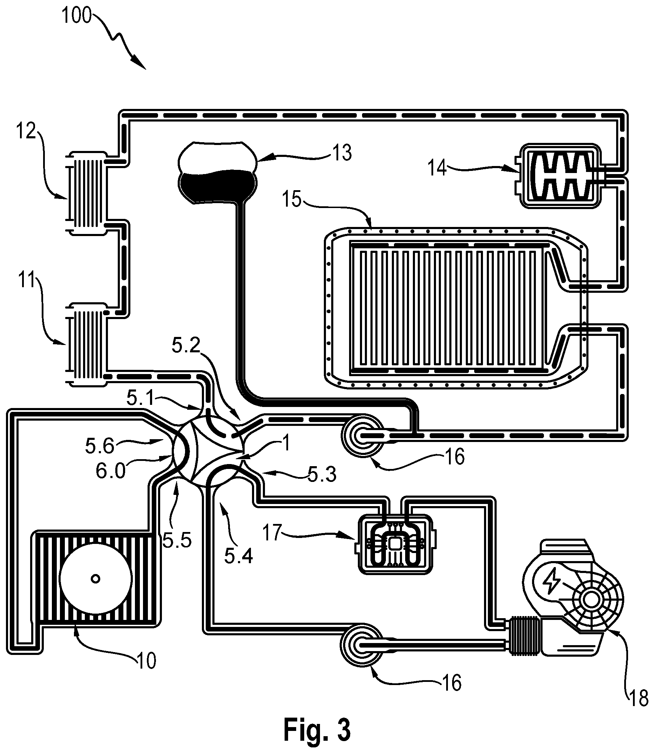

Bezogen auf das in Fig. 3 dargestellte Schaltschema eines Thermalmanagementsystems werden durch diese Flusswegstruktur 6.0 alle dargestellten Komponenten des Thermalmanagementsystems einschließlich dem Radiator 10 in Reihe geschaltet, und alle Komponenten befinden sich somit in einem großen gemeinsamen Kreislauf. Dieser Schaltzustand ist besonders bevorzugt zum Laden einer Hochvoltbatterie bei Außentemperaturen knapp unterhalb der jeweils optimalen Ladetemperatur der Hochvoltbatterie. Dadurch, dass sich bei dieser Reihenschaltung die Hochvoltbatterie im gleichen Kreislauf wie der Radiator 10 befindet, ist es möglich die beim Laden in der Hochvoltbatterie anfallende Abwärme über den Radiator 10 abzuführen. Beim Schnellladen mit größeren anfallenden Abwärmemengen und/oder nur einem geringen Temperaturgefälle zur Umgebung kann es bevorzugt sein zusätzlich den vorzugsweise über Kältemittel gekühlten Kühler 11, der vorzugsweise ein Chiller ist, zu verwenden.

Dieser Schaltzustand eignet sich auch zum Fahren des Fahrzeugs, wenn die Außentemperatur knapp unterhalb der jeweils optimalen Entladetemperatur der Hochvoltbatterie liegt und die Motoreinheit 18 bei moderater Fahrweise wenig zusätzliche Abwärme erzeugt. In diesem Betriebszustand lassen sich alle Abwärme-erzeugenden Komponenten über den Radiator 10 kühlen, bzw. temperieren. Dieser Schaltzustand eignet sich zudem als Fail-Safe-Stellung, wie in der Beschreibung vorangehend erläutert, da hier alle Komponenten über den Radiator gekühlt werden können.

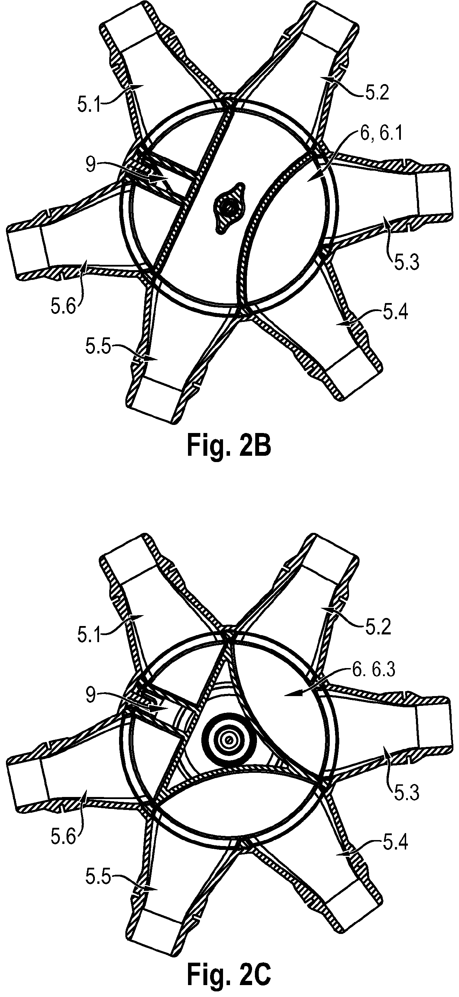

Fig. 2B zeigt eine weitere Flusswegstruktur 6.1. Diese Flusswegstruktur ist so ausgestaltet, dass die Fluidanschlüsse 5.1 und 5.6 jeweils isoliert sind. Die Fluidanschlüsse 5.2 und 5.5 sind miteinander verbunden und die Fluidanschlüsse 5.3 und 5.4 sind ebenso miteinander verbunden. Somit kann eine gezielte Steuerung der Zuleitung des Fluides durch die unterschiedlichen Fluidkreisläufe erzielt werden.

Bezogen auf das in Fig. 3 dargestellte Schaltschema eines Thermalmanagementsystems werden durch diese Flusswegstruktur alle dargestellten Komponenten des Thermalmanagementsystems, jedoch ohne den Radiator 10 in Reihe geschaltet, und die in Reihe geschalteten Komponenten befinden sich somit in einem großen gemeinsamen Kreislauf. Dieser Schaltzustand ist besonders bevorzugt zum Fahren bei Außentemperaturen deutlich unter der jeweils optimalen Entladetemperatur der Hochvoltbatterie. Durch Umgehung des Radiators 10 können Abwärmeverluste an die Umwelt vermieden werden und die Abwärme der Abwärme-erzeugenden Komponenten kann entsprechend zur Erwärmung der Hochvoltbatterie auf optimale Entladetemperatur genutzt werden und/oder auch zur Beheizung des Fahrgastraums über vorzugsweise einen Kühler 11, der vorzugsweise ein Chiller ist, und dem Kühlmittelkreislauf einen Teil der Abwärmeenergie zum Heizen des Fahrgastraums entnimmt.

Eine weitere, nicht im Detail dargestellte weitere Flusswegstruktur 6.2 kann wie nachfolgend beschreiben ausgestaltet sein. Im Unterschied zu der Flusswegstruktur 6.1, die in Fig. 2B gezeigt ist, sind die Fluidanschlüsse 5.5 und 5.6 sowie die Fluidanschlüsse 5.1 und 5.4 und die Fluidanschlüsse 5.2 und 5.3 miteinander verbunden.

Bezogen auf das in Fig. 3 dargestellte Schaltschema eines Thermalmanagementsystems wird durch diese Flusswegstruktur das Thermalmanagementsystems wieder in zwei unabhängige Kreisläufe, einen Batterie- und einen Antriebskreislauf, aufgeteilt, jedoch unter Verwendung des Radiators 10 für den Antriebskreislauf. Diese Flusswegstruktur 6.2 eignet sich besonders bei hohen Außentemperaturen oberhalb der jeweils optimalen Entladetemperatur der Hochvoltbatterie. Um die Hochvoltbatterie auf optimale Entladetemperatur zu bringen bzw. auf dieser zu halten, ist vorzugsweise ein über ein Kältemittel betriebener Kühler 11, der vorzugsweise ein Chiller ist, zu verwenden, der dem Batteriekreislauf inklusive der Hochvoltbatterie Wärme entziehen kann.

Der Betriebstemperaturbereich des Antriebskreislaufs umfasst deutlich höhere Temperaturen als der Batteriekreislauf, so dass der Antriebskreislauf auch noch bei höheren Außentemperaturen über den Radiator 10 gekühlt werden kann.

Eine Zwischenschaltstellung über die aneinander angrenzenden Flusswegstrukturen 6.1 aus Fig. 2B und der nicht im Detail dargestellten Figur 6.2 führt zu einer zumindest indirekten Verbindung bzw. Öffnung aller Fluidanschlüsse und ist bevorzugt für den Befüllvorgang des Temperierkreislaufes geeignet.

Fig. 2C zeigt eine weitere Flusswegstruktur 6.3. Im Unterschied zu der Flusswegstruktur, die in Fig. 2B gezeigt ist, sind hier die Fluidanschlüsse 5.2 und 5.3 sowie die Fluidanschlüsse 5.4 und 5.5 miteinander verbunden und die Fluidanschlüsse 5.1 und 5.6 sind jeweils isoliert. Alle in den Figuren 2A, 2B und 2C gezeigten Flusswegstrukturen 6 weisen einen Fluidverbindungskanal 9 auf, der eine Verbindung von verschiedenen Aufnahmeräumen innerhalb des Schaltventils ermöglicht. Der Fluidverbindungskanal 9 ist im Ventilkörper 3 und/oder im Bereich des Gehäuses 2 ausgebildet und verläuft im Wesentlichen parallel zur Verschiebungs- und/oder Rotationsachse des Ventils. Er verbindet mindestens zwei Aufnahmeräume 21 und 22 fluidtechnisch miteinander, sodass ein gerichteter Durchfluss eines Mediums zwischen diesen Bereichen ermöglicht wird.

Bezogen auf das in Fig. 3 dargestellte Schaltschema eines Thermalmanagementsystems wird durch diese Flusswegstruktur das Thermalmanagementsystems in zwei unabhängige Kreisläufe aufgeteilt und der Radiator 10 wird von der Durchströmung ausgeschlossen.

Durch die Aufteilung des Thermalmanagementsystems in zwei unabhängige Kreisläufe ergibt sich ein Kreislauf, nachfolgend Batteriekreislauf genannt, in dem sich die Hochvoltbatterie befindet und ein zweiter davon unabhängiger Kreislauf, nachfolgend Antriebskreislauf genannt, in dem sich die Motoreinheit 18 befindet. Die Aufteilung des Thermalmanagementsystems in einen Batterie- und Antriebskreislauf ermöglicht eine individuelle, unabhängige Temperierung der Hochvoltbatterie und des Antriebskreislaufs. Diese Flusswegstruktur 6 eignet sich besonders zur energieeffizienten Vorkonditionierung, d.h. Vorwärmung der Hochvoltbatterie bis auf Ladetemperatur bei Außentemperaturen unterhalb der Mindest-Ladetemperatur, da während der Vorwärmung über eine Wärmequelle beispielsweise einen elektrischen Heizer 14, vorzugsweise ein PTC-Heizelement 14 und/oder einen Wärmeübertrager 12, der vorzugsweise ein flüssigkeitsgekühlter Kondensator (liquid-cooled-condensor LCC) ist, da einerseits ein Wärmeverlust über den umgangenen Radiator 10 vermieden wird und andererseits das Aufheizen der thermischen Massen der Antriebskreislauf-Komponenten vermieden wird.

Fig. 3 zeigt ein Schaltschema eines Thermalmanagementsystems 100. Das Schaltschema dient zur exemplarischen Erläuterung der Funktionsweise des Schaltventils 1 und dessen Flusswegstrukturen 6, sowie zur Beschreibung eines Verfahrens zur Temperierung des Thermalmanagementsystems 100 über unterschiedliche Flusswegstrukturen. Es ist selbsterklärend, dass auch Thermalmanagementsysteme, die von ihrem schematischen Aufbau abweichend zu dem dargestellten Thermalmanagementsysteme sind, ebenfalls über das erfindungsgemäße Schaltventil temperiert werden können. Je nach Thermalmanagementsystem und gewünschter Temperierungsstrategie können Flusswegstrukturen mit anderer Kodierung eingesetzt werden oder es können zusätzliche Flusswegstrukturen ergänzt sein oder entfallen. Ebenfalls kann ein anderes Thermalmanagementsystem eine abweichende Anzahl an Fluidanschlüssen erfordern, z.B. bei einem zusätzlichen Teilkreislauf für eine zusätzliche Fahrgastzellen-Heizung, so dass die Anzahl der Fluidanschlüsse des Schaltventils entsprechend anzupassen ist.

Das exemplarisch dargestellte Schaltschema des Thermalmanagementsystems 100 besteht aus einem Batteriekreislauf als Teilkreislauf umfassend eine Batteriegehäuse 15, das eine Hochvoltbatterie beinhaltet, einem Ausgleichsbehälter 13, einer ersten Temperiermittelpumpe 16, einem Kühler 11, einem Wärmeübertrager 12, und einem elektrischen Heizer 14.

Zudem umfasst das Thermalmanagementsystems 100 einen Antriebskreislauf als weiteren Teilkreislauf umfassend die Motoreinheit 18, einer zweiten Temperiermittelpumpe 16 und einer zu temperierenden Elektronikkomponente 17, beispielsweise eine Lade- oder Steuerungs-Elektronik.

Der Radiator 10 lässt sich optional über das Schaltventil mit dem Antriebskreislauf verbinden, oder mit beiden in Reihe geschalteten Teilkreisläufen, wie in Fig. 2A beschrieben.

Die in Figur 3 dargestellte Schaltstellung des Schaltventils 1, in der eine bestimmte Flusswegstruktur mit den Fluidanschlüssen fluidtechnisch verbunden ist, stellt lediglich ein Ausführungsbeispiel dar. Abhängig von der gewählten Schaltstellung des Ventilkörpers kann alternativ eine andere Flusswegstruktur, beispielsweise eine Flusswegstruktur gemäß Fig. 2B oder eine Flusswegstruktur gemäß Fig. 2C aktiviert werden. Ebenso ist es möglich, dass in einer Zwischenschaltstellung zwei benachbarte Flusswegstrukturen gleichzeitig mit den Fluidanschlüssen in Verbindung stehen. Infolgedessen ergeben sich jeweils unterschiedliche Strömungsverläufe innerhalb des Thermalmanagementsystems 100, wodurch gezielt einzelne Fluidkreisläufe miteinander verbunden, voneinander getrennt oder umgeleitet werden können.

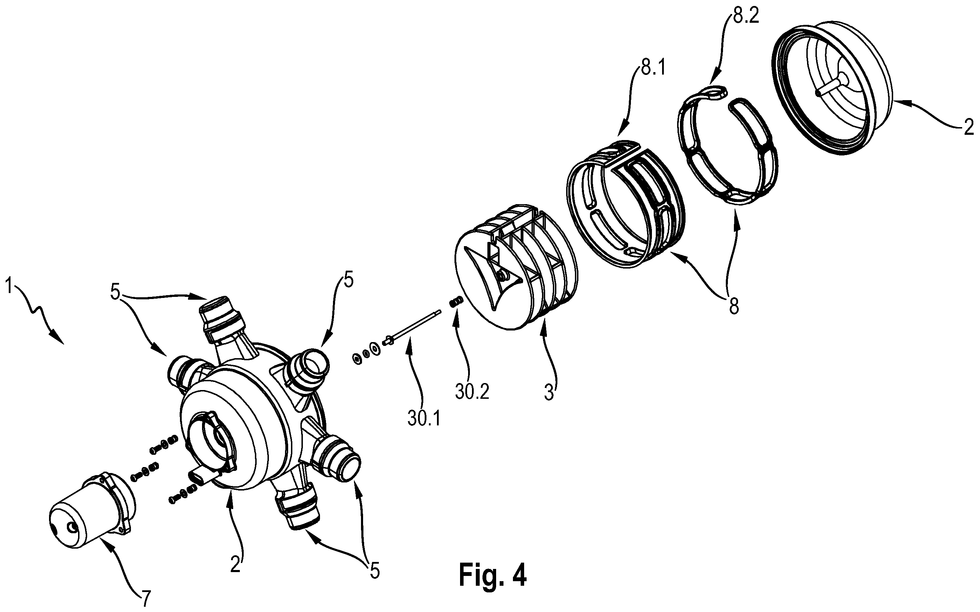

Fig. 4 zeigt eine Explosionsdarstellung eines erfindungsgemäßen Schaltventils 1, bestehend aus mehreren funktionalen Baugruppen und Einzelkomponenten.

Das Gehäuse 2 bildet die äußere Struktur des Ventils und weist mehrere Fluidanschlüsse 5 auf, die zur Anbindung an externe Fluidkreisläufe dienen. Innerhalb des Gehäuses ist ein Ventilkörper 3 angeordnet, der über eine Stelleinrichtung 7 verfahrbar ist. Die Stelleinrichtung 7 treibt einen Antriebsmechanismus, beispielsweise Spindelantrieb bestehend aus einer Spindel 30.1 und einer Spindelmutter 30.2., an, der eine präzise translatorische und/oder rotatorische Bewegung des Ventilkörpers ermöglicht.

Zwischen dem Ventilkörper 3 und dem Gehäuse 2 ist mindestens ein Dichtungselement 8 vorgesehen, das zur fluiddichten Trennung der einzelnen Fluidanschlüsse 5 und Flusswegstrukturen 6 dient. In der gezeigten Ausführungsform ist das Dichtungselement zweiteilig ausgebildet, bestehend aus einer Manschette 8.1 und einem elastischem Element 8.2.

Die Flusswegstrukturen 6 sind im Ventilkörper 3 integriert bzw. durch die Geometrie des Ventilkörpers 3 ausgebildet.

Durch ein entsprechendes Verfahren des Ventilkörpers entlang der Verschiebungs- und/oder Rotationsachse auf die Höhe der Fluidanschlüsse 5 können die unterschiedlichen Schaltstellungen eingestellt werden.

Die vorliegende Erfindung bietet gegenüber dem Stand der Technik erhebliche Vorteile, insbesondere durch die Reduktion auf vorzugsweise nur ein einziges Schaltventil. Dies ermöglicht eine signifikante Kosteneinsparung durch den geringeren Materialeinsatz, eine reduzierte Anzahl an Bauteilen sowie minimierte Schnittstellen. Darüber hinaus führt die kompakte Bauweise zu einer Gewichtsreduzierung und einem deutlich geringeren Bauraumbedarf. Die reduzierte Systemkomplexität trägt zudem zu einer erhöhten Ausfallssicherheit des Gesamtsystems bei. Insgesamt stellt die Erfindung eine technisch wie wirtschaftlich optimierte Lösung dar, die sich durch Effizienz, Zuverlässigkeit und Ressourcenschonung auszeichnet.

### Bezugszeichenliste

- 1: Schaltventil
- 2: Gehäuse
- 3: Ventilkörper
- 4: Verschiebungs- und/oder Rotationsachse
- 5: Fluidanschluss
- 6: Flusswegstruktur
- 7: Stelleinrichtung
- 8: Dichtungselement
- 8.1: Manschette
- 8.2: elastisches Element
- 9: Fluidverbindungskanal
- 10: Radiator
- 11: Kühler
- 12: Wärmeübertrager
- 13: Ausgleichsbehälter
- 14: PTC-Heizelement
- 15: Batteriegehäuse
- 16: Pumpe
- 17: Elektronikkomponente
- 18: Motoreinheit
- 20: Aufnahmeraum
- 21: zusätzlichen Fluidanschluss
- 30: Linearantrieb
- 30.1: Spindel
- 30.2: Spindelmutter
- 100: Thermalmanagementsystem

## Patentansprüche

1. Schaltventil (1), umfassend:
ein Gehäuse (2),
eine Stelleinrichtung (7) und
einen in dem Gehäuse (2) angeordneten Ventilkörper (3) mit mindestens zwei separaten Flusswegstrukturen (6),
wobei das Gehäuse (2) und der Ventilkörper (3) mittels der Stelleinrichtung (7) relativ zueinander drehbar und/oder verschiebbar angeordnet sind,
wobei das Gehäuse (2) mehrere Fluidanschlüsse (5) aufweist, wobei jeder Fluidanschluss (5) mit einer Fluidleitung verbindbar oder verbunden ist,
wobei jede Flusswegstruktur (6) für jeden Fluidanschluss (5) einen Verschluss des Fluidanschlusses (5) oder eine Fluidverbindung zwischen dem Fluidanschluss (5) und mindestens einem weiteren Fluidanschluss (5) der mehreren Fluidanschlüsse (5) definiert,
wobei die Stelleinrichtung (7) dazu ausgebildet ist, den Ventilkörper (3) zwischen mindestens zwei Hauptschaltstellungen reversibel zu verdrehen und/oder zu verschieben, wobei in jeder Hauptschaltstellung lediglich eine Flusswegstruktur (6) fluidtechnisch mit den Fluidanschlüssen (5) in Verbindung steht.

2. Schaltventil (1) nach Anspruch 1, **dadurch gekennzeichnet, dass** der Ventilkörper (3) und/oder das Gehäuse (2) mindestens ein Dichtungselement (8) zur Abdichtung der fluidtechnischen Verbindung der Fluidanschlüsse (5) mit der in Verbindung stehenden Flusswegstruktur (6) des Ventilkörpers (3) aufweist.

3. Schaltventil (1) nach Anspruch 1 oder 2, **dadurch gekennzeichnet, dass** die Stelleinrichtung (7) einen Antriebsmechanismus aufweist, bevorzugt einen Linearantrieb (30), wobei der Linearantrieb (30) besonders bevorzugt vorzugsweise als Spindelantrieb ausgeführt ist.

4. Schaltventil (1) nach einem der Ansprüche 1 bis 3, **dadurch gekennzeichnet, dass** die Stelleinrichtung (7) elektrisch, pneumatisch oder hydraulisch betreibbar ist.

5. Schaltventil (1) nach einem der vorhergehenden Ansprüche, **dadurch gekennzeichnet, dass** die Stelleinrichtung (7) eine Kulissenführung aufweist, die dazu eingerichtet ist, den Ventilkörper (3) innerhalb des Gehäuses (2) entlang einer Verschiebungs- und/oder Rotationsachse translatorisch und/oder rotatorisch zu führen.

6. Schaltventil (1) nach einem der vorhergehenden Ansprüche, **dadurch gekennzeichnet, dass** die Fluidanschlüsse (5) in einer Ebene liegen, bevorzugt orthogonal zu einer Verschiebungs- und/oder Rotationsachse des Ventilkörpers (3).

7. Schaltventil (1) nach einem der vorhergehenden Ansprüche, **dadurch gekennzeichnet, dass** die Stelleinrichtung (7) dazu ausgebildet ist, den Ventilkörper (3) in mindestens eine Zwischenschaltstellung reversibel zu verdrehen und/oder zu verschieben, wobei in jeder Zwischenschaltstellung zwei aneinander angrenzende Flusswegstrukturen (6) fluidtechnisch mit den Fluidanschlüssen (5) in Verbindung stehen.

8. Schaltventil (1) nach einem der vorhergehenden Ansprüche, **dadurch gekennzeichnet, dass** der Ventilkörper (3) und/oder das Gehäuse (2) aus einem Kunststoffmaterial, bevorzugt aus einem kurz- oder langfaserverstärkten Kunststoffmaterial, ausgebildet ist bzw. sind.

9. Schaltventil (1) nach einem der vorhergehenden Ansprüche, **dadurch gekennzeichnet, dass** mindestens ein Aufnahmeraum (20) zwischen der Gehäuseinnenwandung des Gehäuses (2) und dem Ventilkörper (3) zur Aufnahme eines Fluides ausgebildet ist, wobei das Gehäuse (2) mindestens einen zusätzlichen Fluidanschluss (21) zur Zu- und/oder Abführung eines Fluides in den mindestens einen Aufnahmeraum aufweist oder mit einer Fluidleitung über einen der Fluidanschlüsse (5) fluidtechnisch verbunden ist.

10. Schaltventil (1) nach Anspruch 9, **dadurch gekennzeichnet, dass** mindestens zwei Aufnahmeräume (20) ausgebildet sind und wobei im Ventilkörper (3) und/oder im Bereich des Gehäuses (2) mindestens ein Fluidverbindungskanal (9) ausgebildet ist, welcher bevorzugt parallel zu der Verschiebungs- und/oder Rotationsachse verläuft und die mindestens zwei Aufnahmeräume (20) fluidtechnisch miteinander verbindet.

11. Schaltventil (1) nach einem der vorhergehenden Ansprüche, **dadurch gekennzeichnet, dass** ein Aufnahmeraum (20) zur Aufnahme eines Fluides an das Gehäuse (2) angeformt ist, wobei der Aufnahmeraum (20) über mindestens einen zusätzlichen Fluidanschluss zur Zu- und/oder Abführung eines Fluides mit dem Gehäuseinneren verbunden ist oder mit einer Fluidleitung über einen der Fluidanschlüsse (5) fluidtechnisch verbunden ist.

12. Schaltventil (1) nach einem der vorhergehenden Ansprüche, **dadurch gekennzeichnet, dass** das Schaltventil (1) im Inneren eines Ausgleichsbehälter angeordnet ist und optional über mindestens einen Fluidanschluss (5) mit dem Ausgleichsbehälter verbunden ist.

13. Schaltventil (1) nach einem der vorhergehenden Ansprüche, **dadurch gekennzeichnet, dass** der Ventilkörper (3) die Form eines Zylindersegmentes oder Zylindersektors aufweist, wobei die Verschiebungs- und/oder Rotationsachse entlang der Mittelpunktsachse des Zylindersegments oder Zylindersektors verläuft, wobei jede der mehreren Flusswegstrukturen (6) in einem von mehreren Umfangsabschnitten entlang eines Umfangs um die Mittelpunktsachse des Zylindersegments oder Zylindersektors ausgebildet ist.

14. Schaltventil (1) nach einem der vorhergehenden Ansprüche, **dadurch gekennzeichnet, dass** der Ventilkörper (3) die Form eines Zylinders, insbesondere eines Kreiszylinders mit einer Mittelpunktsachse aufweist, wobei die Verschiebungs- und/oder Rotationsachse entlang der Mittelpunktsachse des Zylinders verläuft, wobei jede der mehreren Flusswegstrukturen (6) in einem von mehreren Längsabschnitten des Zylinders entlang der Mittelpunktsachse ausgebildet ist.

15. Schaltventil (1) nach einem der vorhergehenden Ansprüche, **dadurch gekennzeichnet, dass** der Ventilkörper (3) und/oder das Gehäuse (2) eine rotationssymmetrische, insbesondere runde Querschnittsfläche quer zur Verschiebungs- und/oder Rotationsachse aufweisen.

16. Schaltventil (1) nach einem der vorhergehenden Ansprüche, **dadurch gekennzeichnet, dass** der Ventilkörper (3) in eine Befüllungsposition verfahrbar ist, in der keine der Flusswegstrukturen (6) fluidtechnisch mit den Fluidanschlüssen (5) verbunden ist, sodass sämtliche Fluidanschlüsse (5) frei und unmittelbar miteinander kommunizieren können.

17. Thermalmanagementmodul für ein batterieelektrisch angetriebenes Fahrzeug, aufweisend:
eine erste und eine zweite fluiddichte, polymere Trägerschicht mit jeweils einer ersten und einer gegenüberliegenden zweiten Schichtoberfläche;
wobei die ersten Schichtoberflächen der ersten und zweiten Trägerschicht einander zugewandt angeordnet und bereichsweise entlang einer ersten Verbindungsebene stoffschlüssig miteinander verbunden sind;
wobei zwischen der ersten und der zweiten Trägerschicht ein Anschlussraum zur Anordnung und Ankopplung eines Schaltventils (1) nach einem der Ansprüche 1 bis 16 durch erste Auswölbungen in der ersten und/oder zweiten Trägerschicht integral ausgebildet ist, wobei sich die ersten Auswölbungen von der ersten Verbindungsebene abstehend erstrecken;
wobei mehrere voneinander abgegrenzte Fluidleitungen für den Transport eines Temperierungsfluids zwischen der ersten und zweiten Trägerschicht durch zweite Auswölbungen in der ersten Trägerschicht integral ausgebildet sind, wobei sich die zweiten Auswölbungen von der ersten Verbindungsebene abstehend erstrecken;
wobei der Anschlussraum eine Mehrzahl von Ports zur fluiddichten Ankopplung von Ein- und Ausgängen des Schaltventils (1) aufweist, die jeweils integral mit einem jeweiligen ersten Ende der Fluidleitungen ausgebildet sind und mit diesen fluidtechnisch kommunizieren; und
wobei an mehreren jeweiligen zweiten Enden der Fluidleitungen integral Anbindungseinrichtungen zur Ankopplung von Fluidkreisläufen des batterieelektrisch angetriebenen Fahrzeuges an die Fluidleitungen ausgebildet sind.
